(19) Europäisches Patentamt / European Patent Office / Office européen des brevets

(11) **EP 4 723 242 A1**

(12) **EUROPEAN PATENT APPLICATION**
published in accordance with Art. 153(4) EPC

(43) Date of publication:
08.04.2026   Bulletin 2026/15

(21) Application number: 24814985.8

(22) Date of filing: 09.04.2024

(51) International Patent Classification (IPC):
*H01M 4/62* (2006.01)       *H01G 11/06* (2013.01)
*H01G 11/30* (2013.01)       *H01G 11/50* (2013.01)
*H01M 4/13* (2010.01)

(52) Cooperative Patent Classification (CPC):
Y02E 60/10

(86) International application number:
**PCT/JP2024/014407**

(87) International publication number:
**WO 2024/247498 (05.12.2024 Gazette 2024/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  31.05.2023  JP 2023090338

(71) Applicant: Tayca Corporation
Osaka-shi,
Osaka 551-0022 (JP)

(72) Inventors:
• **TSURUMURA, Tatsuya**
  **Osaka-shi, Osaka 551-0022 (JP)**
• **YAGENJI, Yuya**
  **Osaka-shi, Osaka 551-0022 (JP)**
• **GOTO, Yuki**
  **Osaka-shi, Osaka 551-0022 (JP)**

(74) Representative: **Hasegawa, Kan**
**Patentanwaltskanzlei Hasegawa**
**Untere Hauptstraße 56**
**85354 Freising (DE)**

(54) **PRE-DOPING AGENT FOR POWER STORAGE DEVICE AND METHOD FOR PRODUCING SAME**

(57)      A pre-doping agent for a power storage device, the pre-doping agent comprising, as a main component, a lithium iron oxide represented by the following formula (1), wherein the pre-doping agent exhibits an intensity ratio ($I16.7/I23.6$) of less than 40% between diffraction peak intensity at a diffraction angle ($2\theta$) of $16.7 \pm 0.5°$ ($I16.7$) and diffraction peak intensity at a diffraction angle ($2\theta$) of $23.6 \pm 0.5°$ ($I23.6$) in X-ray diffraction measurement. This configuration provides a pre-doping agent for a power storage device, the pre-doping agent being capable of preventing reduction in energy density in power storage devices in combination with achieving reduced production cost, being capable of preventing the decomposition of electrolytic solutions through allowing pre-doping with lithium ions at lower charging voltages, and having a very high irreversible capacity. $Li_5Fe_xO_y$ (1) [wherein x satisfies $0.6 \leq x < 1.0$, and y satisfies $3.4 \leq y < 4.0$.]

[FIG. 1]

**Description**

Technical Field

The present invention relates to a pre-doping agent that is used for power storage devices including lithium ion batteries, lithium ion capacitors, and electric double-layer capacitors.

Background Art

For power storage devices including lithium ion batteries, lithium ion capacitors, and electric double-layer capacitors, pre-doping a negative electrode with lithium ions is known to cancel the potential drop of the negative electrode and the irreversible capacity of the negative electrode in initial charging, and as a result enable achievement of high capacity for batteries.

Patent Literature 1 proposes a method in which metal foils each having a plurality of through-holes are used as current collectors, a metal lithium foil is disposed in electrodes of many positive electrodes and negative electrodes laminated, and thereby the negative electrodes are pre-doped with lithium ions via an electrolytic solution. However, the use of metal foils each having a plurality of through-holes as current collectors and a metal lithium foil requires high production cost, and further causes a problem of reduction in volumetric energy density in power storage devices.

A method of reacting metal lithium in the form of microparticles and a negative electrode active material in a dry or wet process before electrode coating has been proposed as another pre-doping method, whereas handling metal lithium in the form of microparticles, which is highly reactive, imposes high loads on the battery production process, and this is technically and economically a big problem.

Patent Literature 2 describes a method for producing a lithium-ion secondary battery, wherein a battery including a pre-doping agent obtained by complexing a lithium-manganese-based oxide having a basic composition of $Li_6MnO_4$ and a carbon material, and a positive electrode having a positive electrode active material, a negative electrode, and an electrolyte is subjected to initial charging to allow the negative electrode active material to intercalate lithium ions released from the positive electrode active material and the pre-doping agent and generate an oxide of manganese from the pre-doping agent, and the positive electrode potential in the initial charging is 4.5 V (with reference to the Li counter electrode) or more. According to the description, complexing a carbon material and a lithium-manganese-based oxide results in the formation of many electroconductive paths to the lithium-manganese-based oxide, facilitating the decomposition of the lithium-manganese-based oxide in charging. The pre-doping agent described in Patent Literature 2 is said to have a high irreversible capacity. However, the positive electrode potential of 4.5 V (with reference to the Li counter electrode) or more in the initial charging causes oxidative decomposition of common electrolytic solutions, and hence applying the pre-doping agent to power storage devices including lithium ion batteries and lithium ion capacitors is difficult.

Patent Literature 3 describes a pre-doping agent for a power storage device, the pre-doping agent comprising a lithium iron oxide represented as $Li_xFeO_y$ ($3.5 \leq x \leq 7.0$, $3.1 \leq y \leq 5.0$), wherein the pre-doping agent exhibits a diffraction peak at a diffraction angle ($2\theta$) of $23.6 \pm 0.5°$ with a half width of 0.06 to 0.17°, and exhibits an intensity ratio (I44.6/I23.6) of less than 8% between diffraction peak intensity at a diffraction angle ($2\theta$) of $44.6 \pm 0.5°$ (I44.6) and diffraction peak intensity at a diffraction angle ($2\theta$) of $23.6 \pm 0.5°$ (I23.6) in X-ray diffraction measurement. According to this, the capability of pre-doping with lithium ions at lower charging voltages can prevent the decomposition of electrolytic solutions, and thus a pre-doping agent having high charging depth and high discharge capacity with the occurrence of short-circuit phenomena prevented can be provided. Patent Literature 4 describes carbon-covered $Li_5FeO_4$ comprising $Li_5FeO_4$ and a carbon film covering a surface of the $Li_5FeO_4$, and having a BET specific surface area in a range of 2 to 5.4 m$^2$/g. According to this, a carbon-film lithium iron oxide that develops a sufficient capacity can be provided. A pre-doping agent that exhibits a much higher irreversible capacity at a lower charging voltage of 4.3 V or less has been demanded.

Citation List

Patent Literature

Patent Literature 1: JP 5220510 B2
Patent Literature 2: JP 6217990 B2
Patent Literature 3: WO 2022/172881 A1
Patent Literature 4: JP 6922672 B2

Summary of Invention

Technical Problem

The present invention has been made to solve the problems, and an object of the present invention is to provide a pre-doping agent for a power storage device, the pre-doping agent being capable of preventing reduction in energy density in power storage devices in combination with achieving reduced production cost, being capable of preventing the decomposition of electrolytic solutions through allowing pre-doping with lithium ions at lower charging voltages, and having a very high irreversible capacity.

Solution to Problem

The problems can be solved by providing a pre-doping agent for a power storage device, the pre-doping agent comprising, as a main component, a lithium iron oxide represented by the following formula (1):

$$Li_5Fe_xO_y \qquad (1)$$

wherein x satisfies $0.6 \leq x < 1.0$, and y satisfies $3.4 \leq y < 4.0$,
wherein the pre-doping agent exhibits an intensity ratio (I16.7/I23.6) of less than 40% between diffraction peak intensity at a diffraction angle (2θ) of $16.7 \pm 0.5°$ (I16.7) and diffraction peak intensity at a diffraction angle (2θ) of $23.6 \pm 0.5°$ (I23.6) in X-ray diffraction measurement.

The problems are also solved by providing a pre-doping agent for a power storage device, the pre-doping agent comprising, as a main component, a lithium iron oxide represented by the following formula (1):

$$Li_5Fe_xO_y \qquad (1)$$

wherein x satisfies $0.6 \leq x < 1.0$, and y satisfies $3.4 \leq y < 4.0$,
wherein the pre-doping agent exhibits an irreversible capacity of 712 mAh/g or more and 1100 mAh/g or less at a voltage of 3.0 to 4.3 V with reference to a Li reference electrode in initial charging.

In this case, in a preferable embodiment, the pre-doping agent exhibits an intensity ratio (I43.5/I23.6) of less than 10% between diffraction peak intensity at a diffraction angle (2θ) of $43.5 \pm 0.5°$ (I43.5) and diffraction peak intensity at a diffraction angle (2θ) of $23.6 \pm 0.5°$ (I23.6) in X-ray diffraction measurement.

It is preferable that the pre-doping agent have a crystal structure with a space group of Pbca, and a/c and b/c as ratios of crystal lattice constants, a, b, and c, be 0.99410 or less and 1.00170 or less, respectively; the pre-doping agent preferably has a tap density of 1.0 to 1.5 g/ml; and the pre-doping agent preferably has an $SO_3$ content of 5,000 ppm or less.

A positive electrode for a power storage device, the positive electrode comprising the pre-doping agent and a positive electrode active material, is a preferable embodiment, and a power storage device comprising the positive electrode is also a preferable embodiment.

The problems are also solved by providing a method for producing the pre-doping agent for a power storage device, the pre-doping agent comprising, as a main component, a lithium iron oxide obtained by mixing and calcining an iron raw material and a lithium raw material, the method comprising:
mixing the iron raw material and the lithium raw material together, performing a first calcining step of calcining the resulting mixture in an inert gas atmosphere having an oxygen concentration of 1 to 52000 ppm at 350 to 650°C for 2 to 100 hours, pulverizing a powdery product obtained as a first calcined product, performing a second calcining step of calcining the pulverized powder in an inert gas atmosphere having an oxygen concentration of 1 to 52000 ppm at 700 to 1050°C for 2 to 100 hours, and pulverizing a powdery product obtained as a second calcined product to give the lithium iron oxide.

Advantageous Effects of Invention

The present invention can provide a pre-doping agent for a power storage device, the pre-doping agent being capable of preventing reduction in energy density in power storage devices in combination with achieving reduced production cost, being capable of preventing the decomposition of electrolytic solutions through allowing pre-doping with lithium ions at lower charging voltages, and having a very high irreversible capacity.

Brief Description of Drawings

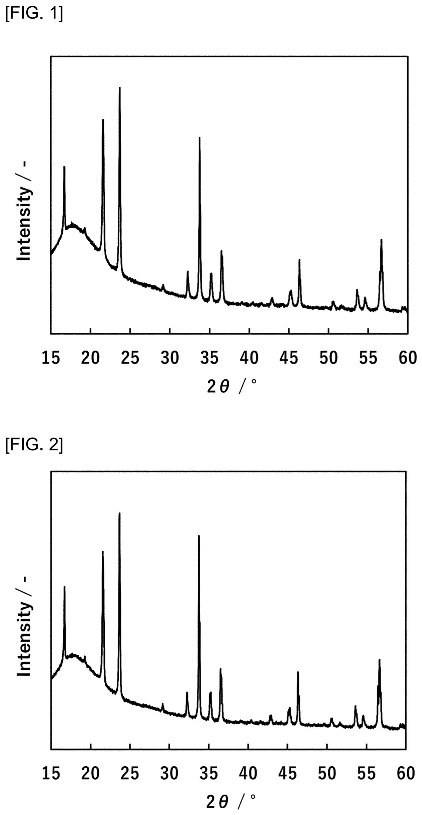

[Figure 1] Figure 1 is a diagram showing an XRD pattern for a pre-doping agent obtained in Example 1.
[Figure 2] Figure 2 is a diagram showing an XRD pattern for a pre-doping agent obtained in Example 2.

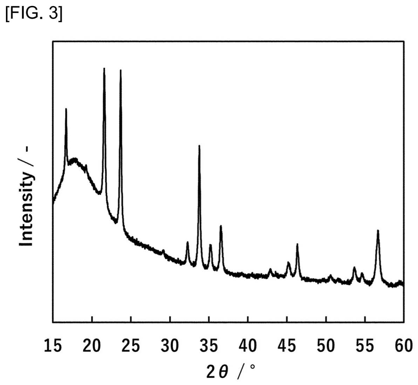

[Figure 3] Figure 3 is a diagram showing an XRD pattern for a pre-doping agent obtained in Comparative Example 2.

Description of Embodiments

The pre-doping agent of the present invention for a power storage device (hereinafter, occasionally referred to as "pre-doping agent", shortly) comprises, as a main component, a lithium iron oxide represented by the following formula (1):

$$Li_5Fe_xO_y \qquad (1)$$

wherein x satisfies $0.6 \leq x < 1.0$, and y satisfies $3.4 \leq y < 4.0$,
wherein the pre-doping agent exhibits an intensity ratio of less than 40% between diffraction peak intensity at a diffraction angle ($2\theta$) of $16.7 \pm 0.5°$ (I16.7) and diffraction peak intensity at a diffraction angle (20) of $23.6 \pm 0.5°$ (I23.6) in X-ray diffraction measurement.

In the pre-doping agent of the present invention, which has the configuration in which the intensity ratio (I16.7/I23.6) is less than 40%, the lithium iron oxide represented by the formula (1) has a largely distorted crystal structure, with lithium oxide doped with a certain amount of Fe.

The phrase "comprising, as a main component" in the present invention indicates that the content of the lithium iron oxide constituting the pre-doping agent for a power storage device and represented by the formula (1) is 80% by mass or more, and means that a Li compound or the like other than the lithium iron oxide represented by the formula (1) may be present. Examples of such compounds include LiOH and $Li_2CO_3$ that are present on the surface, and $LiFeO_2$, which is a lithium iron oxide having a low Li content. The content of the lithium iron oxide represented by the formula (1) is preferably 90% by mass or more, and more preferably 95% by mass or more.

The present inventors have diligently examined to reveal that a pre-doping agent for a power storage device with a very high irreversible capacity is obtained by a lithium iron oxide having a specific composition with a configuration in which the intensity ratio (I16.7/I23.6) between diffraction peak intensity at a diffraction angle ($2\theta$) of $16.7 \pm 0.5°$ (I16.7) and diffraction peak intensity at a diffraction angle ($2\theta$) of $23.6 \pm 0.5°$ (I23.6) in X-ray diffraction measurement is less than 40%. Specifically, in a preferable embodiment, the pre-doping agent of the present invention exhibits an irreversible capacity of 712 mAh/g or more and 1100 mAh/g or less at a voltage of 3.0 to 4.3 V with reference to a Li reference electrode in initial charging. The pre-doping agent of the present invention allows pre-doping treatment even at low charging voltages, is capable of preventing the decomposition of electrolytic solutions, and has a very high irreversible capacity, and hence enables further reduction in the amount of the pre-doping agent to be used in applying to a positive electrode. Accordingly, a positive electrode active material in an increased proportion can be used, successfully giving a power storage device with a higher capacity. The irreversible capacity of the pre-doping agent of the present invention is more preferably 720 mAh/g or more, further preferably 750 mAh/g or more, particularly preferably 800 mAh/g or more, even further preferably 820 mAh/g or more, and most preferably 850 mAh/g or more. The irreversible capacity is more preferably 1050 mAh/g or less, and further preferably 980 mAh/g or less.

The pre-doping agent of the present invention comprises, as a main component, the lithium iron oxide represented by the formula (1), and x satisfies $0.6 \leq x < 1.0$. In the lithium iron oxide represented by the formula (1), x indicates the amount of Fe doped into lithium oxide. If x is 1.0 or more, the small relative amount of Li to Fe results in shortage of lithium for pre-doping a negative electrode, leading to failure in giving a pre-doping agent having the high irreversible capacity of 712 mAh/g or more. If x is less than 0.6, the small amount of Fe for doping gives characteristics closer to those of lithium oxide, thus reducing release of lithium accompanied by oxidation reaction in charging at the low voltage of 4.3 V or less. This results in a lowered charge capacity, leading to failure in giving a pre-doping agent having the high irreversible capacity of 712 mAh/g or more.

If a lithium iron oxide obtained by adjusting only the composition of the lithium iron oxide represented by the formula (1), that is, lithium oxide undoped with Fe is added, the intensity ratio (I16.7/I23.6) does not reach below 40%, and the high irreversible capacity of 712 mAh/g or more is not achieved. Here, the statement that lithium oxide has been doped with Fe means a lithium iron oxide having such a structure that some of the Li atoms in the lithium oxide have been replaced with Fe atoms. Moreover, if lithium oxide undoped with Fe remains, the lithium oxide causes a coating slurry in making into an electrode to thicken and/or gel, and hence doping lithium oxide with a certain amount of Fe is essential.

For the lithium iron oxide represented by the formula (1), y satisfies $3.4 \leq y \leq 4.0$. If y is less than 3.4, unreacted lithium and iron raw materials may remain. y is preferably 3.5 or more, more preferably 3.6 or more, and further preferably 3.7 or more. If y is more than 4.0, the iron in the lithium iron oxide is in a highly oxidized state, and this may result in a lowered charge capacity. y is preferably 3.9 or less, and more preferably 3.8 or less.

As long as the requirement that the intensity ratio (I16.7/I23.6) be less than 40% is satisfied, the lithium iron oxide represented by the formula (1) may be further doped with an additional metal element M other than Fe. Examples of the additional metal element M include Ni, Co, Mn, Ti, Al, V, Zr, and Nb. Although $0.6 \leq x < 1.0$ should be satisfied for Fe as a prerequisite, the amount of the additional metal element M for doping, z, preferably satisfies $0.01 \leq z \leq 0.4$, and a lithium iron oxide represented by the following formula (2) is a preferable embodiment:

$$Li_5Fe_xM_zO_y \qquad (2)$$

wherein M is a metal element other than Fe, x satisfies $0.6 \leq x < 1.0$, y satisfies $3.4 \leq y < 4.0$, and z satisfies $0.01 \leq z \leq 0.4$.

As is clear from comparison between examples and comparative examples shown later, it was confirmed that, even if the lithium iron oxide represented by the formula (1) had the specific composition ratio, the high irreversible capacity of 712 mAh/g or more was not achieved when the requirement that the intensity ratio (I16.7/I23.6) be less than 40% was not satisfied as in Comparative Examples 1 to 3. In contrast to this, it was confirmed that a pre-doping agent having the very high irreversible capacity of 712 mAh/g or more was successfully obtained when the intensity ratio (I16.7/I23.6) was less than 40% as in Examples 1 to 11. Accordingly, it is understood that employing the configuration in which the intensity ratio (I16.7/I23.6) is less than 40% is of high significance. In addition, the pre-doping agent of the present invention enables reduction in production cost, is capable of preventing the decomposition of electrolytic solutions through allowing pre-doping with lithium ions at lower charging voltages, and has a very high irreversible capacity, and hence enables further reduction in the amount of the pre-doping agent to be used in applying to a positive electrode. Accordingly, a positive electrode active material in an increased proportion can be used to give a power storage device with a higher capacity.

The pre-doping agent of the present invention preferably exhibits a diffraction peak at a diffraction angle ($2\theta$) of $23.6 \pm 0.5°$ with a half width of 0.06 to 0.17° in X-ray diffraction measurement. If the half width is less than 0.06°, a powdery product to be obtained may be hard, causing difficulty in pulverization. In addition, particles after pulverization may be coarse, causing difficulty in application to an electrode. The half width is more preferably 0.07° or more, further preferably 0.09° or more, and particularly preferably 0.10° or more. If the half width is more than 0.17°, polymorphs of lithium iron oxide have been generated, and this may result in a lower irreversible capacity. The half width is more preferably 0.16° or less, further preferably 0.15° or less, particularly preferably 0.14° or less, and most preferably 0.13° or less.

The pre-doping agent of the present invention preferably exhibits an intensity ratio (I43.5/I23.6) of less than 10% between diffraction peak intensity at a diffraction angle ($2\theta$) of $43.5 \pm 0.5°$ (I43.5) and diffraction peak intensity at a diffraction angle ($2\theta$) of $23.6 \pm 0.5°$ (I23.6) in X-ray diffraction measurement. If the intensity ratio (I43.5/I23.6) is 10% or more, the pre-doping agent may have a low irreversible capacity. The intensity ratio (I43.5/I23.6) is more preferably 8% or less, further preferably 6% or less, particularly preferably 4% or less, and most preferably 2% or less. The intensity ratio (I43.5/I23.6) is normally 0% or more.

The pre-doping agent of the present invention preferably exhibits an intensity ratio (I44.6/I23.6) of less than 8% between diffraction peak intensity at a diffraction angle ($2\theta$) of $44.6 \pm 0.5°$ (I44.6) and diffraction peak intensity at a diffraction angle ($2\theta$) of $23.6 \pm 0.5°$ (I23.6) in X-ray diffraction measurement. If the intensity ratio (I44.6/I23.6) is 8% or more, short-circuit phenomena may occur in power storage devices, and the intensity ratio (I44.6/I23.6) is more preferably 5% or less, further preferably 3% or less, and particularly preferably 1% or less. The intensity ratio (I44.6/I23.6) is normally 0% or more.

It is preferable that the pre-doping agent of the present invention have a crystal structure with a space group of Pbca, and crystal lattice constants, a, b, and c, satisfy 9.15000 angstroms $\leq$ a $\leq$ 9.15300 angstroms, 9.21900 angstroms $\leq$ b $\leq$ 9.22200 angstroms, and 9.20600 angstroms $\leq$ c $\leq$ 9.20800 angstroms, respectively. It is preferable that the pre-doping agent of the present invention have a crystal structure with a space group of Pbca, and the ratio a/c and the ratio b/c as ratios of crystal lattice constants, a, b, and c, be 0.99300 to 0.99410 and 1.00100 to 1.00170, respectively. Examination conducted by the present inventors has led to the inference that the present pre-doping agent, in which some Fe atoms have been lost from a lithium iron oxide, has a distorted lithium iron oxide crystal structure, which facilitates release of lithium.

The pre-doping agent of the present invention preferably has a volume resistivity of $1.0 \times 10^1$ to $9.0 \times 10^{15}$ $\Omega \cdot$cm. If the volume resistivity is less than $1.0 \times 10^1$ $\Omega \cdot$cm, electrons preferentially move to the pre-doping agent in a power storage device system to result in limited use of a positive electrode active material in the vicinity of the pre-doping agent, and the resulting localized reaction may cause a lowered capacity. The volume resistivity is preferably $1.0 \times 10^2$ $\Omega \cdot$cm or more, and more preferably $1.0 \times 10^3$ $\Omega \cdot$cm or more. As described later, the pre-doping agent of the present invention is covered with a carbonaceous material or the like in a preferable embodiment. Meanwhile, in terms of retaining the irreversible capacity above a certain level and at the same time controlling the value of volume resistivity above a certain level, the pre-doping agent free from any carbonaceous material is also preferable embodiment. From this viewpoint, the volume resistivity is preferably $9.0 \times 10^4$ $\Omega \cdot$cm or more, more preferably $9.0 \times 10^5$ $\Omega \cdot$cm or more, further preferably $9.0 \times 10^6$ $\Omega \cdot$cm or more, particularly preferably $9.0 \times 10^7$ $\Omega \cdot$cm or more, and most preferably $9.0 \times 10^8$ $\Omega \cdot$cm or more. If the volume resistivity is more than $9.0 \times 10^{15}$ $\Omega \cdot$cm, on the other hand, the move of electrons is interfered, lithium is not sufficiently released from the pre-doping agent, and a lower irreversible capacity may result. The volume resistivity is more preferably $9.0 \times 10^{12}$ $\Omega \cdot$cm or less, further preferably $9.0 \times 10^{11}$ $\Omega \cdot$cm or less, and particularly preferably $9.0 \times 10^{10}$ $\Omega \cdot$cm or less.

The pre-doping agent of the present invention preferably has a specific surface area of 0.05 to 5.0 $m^2$/g. If the

specific surface area is less than 0.05 $m^2/g$, the reaction area is small, lithium is not sufficiently released from the pre-doping agent, and a lowered charge capacity and reduced irreversible capacity may result. The specific surface area is more preferably 0.1 $m^2/g$ or more, further preferably 0.2 $m^2/g$ or more, and particularly preferably 0.5 $m^2/g$ or more. If the specific surface area is more than 5.0 $m^2/g$, a side reaction may be caused. The specific surface area is more preferably 4.0 $m^2/g$ or less, further preferably 3.0 $m^2/g$ or less, particularly preferably 2.0 $m^2/g$ or less, even further preferably 1.5 $m^2/g$ or less, and most preferably 1.4 $m^2/g$ or less.

The pre-doping agent of the present invention preferably has an average particle diameter (D50) of 1 to 60 $\mu$m. The average particle diameter (D50) is more preferably 2 $\mu$m or more, further preferably 3 $\mu$m or more, particularly preferably 4 $\mu$m or more, and most preferably 5 $\mu$m or more. If the average particle diameter (D50) is more than 60 $\mu$m, on the other hand, it may be difficult to prevent the occurrence of short-circuit phenomena in power storage devices. The average particle diameter (D50) is more preferably 50 $\mu$m or less, further preferably 40 $\mu$m or less, particularly preferably 30 $\mu$m or less, and most preferably 25 $\mu$m or less. In the present invention, the term average particle diameter (D50) refers to median diameter obtained by determining particle size distribution with a laser diffraction particle size distribution analyzer (manufactured by NIKKISO CO., LTD., MICROTRAC MT-3000).

The particle size distribution index D10/D50 of the pre-doping agent of the present invention is preferably 0.1 to 0.4, and more preferably 0.12 to 0.4. The particle size distribution index D90/D50 is preferably 2.0 to 4.0, and more preferably 2.2 to 4.0.

The pre-doping agent of the present invention preferably has a tap density of 1.0 to 1.5 g/ml. With the tap density falling within this range, an enhanced energy density is obtained and as a result the pre-doping agent is provided with a very high irreversible capacity. The tap density is more preferably 1.05 g/ml or more, further preferably 1.08 g/ml or more, particularly preferably 1.12 g/ml or more, and most preferably 1.18 g/ml or more. The tap density is more preferably 1.4 g/ml or less.

The pre-doping agent of the present invention preferably has an $SO_3$ content of 5,000 ppm or less. If the $SO_3$ content is more than 5,000 ppm, lithium sulfide may be generated as an impurity, and a lowered charge capacity may result, and thus the $SO_3$ content is more preferably 4,500 ppm or less, further preferably 3,500 ppm or less, particularly preferably 2,500 ppm or less, and most preferably 1,500 ppm or less. The $SO_3$ content is normally 1 ppm or more.

The pre-doping agent of the present invention preferably exhibits a Li ion elution of 15 mg/kg or less. If the Li ion elution is more than 15 mg/kg, the pre-doping agent may contain a lithium compound as an impurity, and a lowered charge capacity or poor slurry stability in electrode production may result, and thus the Li ion elution is more preferably 13 mg/kg, further preferably 12 mg/kg or less, particularly preferably 11 mg/kg or less, and most preferably 10 mg/kg.

The pre-doping agent of the present invention preferably has an L value of 20 to 90 for powder color. If the L value for powder color is less than 20, the pre-doping agent may contain an unreacted iron raw material or the lower lithium iron oxide $LiFeO_2$, and a lowered charge capacity may result, and thus the L value for powder color is more preferably 30 or more, further preferably 40 or more, particularly preferably 50 or more, even further preferably 60 or more, and most preferably 70 or more. If the L value for powder color is more than 90, on the other hand, the pre-doping agent may contain a lithium compound, and a lowered charge capacity may result, and thus the L value for powder color is more preferably 88 or less, further preferably 86 or less, particularly preferably 84 or less, and most preferably 82 or less.

Any method may be used for producing the pre-doping agent of the present invention without limitation. Preferably employed is a method for producing the pre-doping agent for a power storage device, the pre-doping agent comprising, as a main component, a lithium iron oxide obtained by mixing and calcining an iron raw material and a lithium raw material, the method comprising: mixing the iron raw material and the lithium raw material together (hereinafter, occasionally referred to as "the mixing step", shortly), performing a first calcining step of calcining the resulting mixture in an inert gas atmosphere having an oxygen concentration of 1 to 52000 ppm at 350 to 650°C for 2 to 100 hours (hereinafter, occasionally referred to as "the first calcining step", shortly), pulverizing a powdery product obtained as a first calcined product, performing a second calcining step of calcining the pulverized powder in an inert gas atmosphere having an oxygen concentration of 1 to 52000 ppm at 700 to 1050°C for 2 to 100 hours (hereinafter, occasionally referred to as "the second calcining step", shortly), and pulverizing a powdery product obtained as a second calcined product to give the lithium iron oxide.

Examination conducted by the present inventors has revealed that a pre-doping agent of the present invention for a power storage device, the pre-doping agent comprising, as a main component, the lithium iron oxide with a very high irreversible capacity is obtained by mixing the iron raw material and the lithium raw material, performing a first calcining step of calcining the resulting mixture in an inert atmosphere having a specific oxygen concentration in a low-temperature range, and then performing a second calcining step of performing calcination in an inert atmosphere having a specific oxygen concentration in a high-temperature range. The present inventors infer that the crystal structure is distorted through the first calcining step in a low-temperature range, and then doped with the minimum necessary amount of Fe through the second calcining step in a high-temperature range. As is clear from comparison between examples and comparative examples shown later, it was confirmed that a pre-doping agent with a high irreversible capacity was not successfully obtained by performing the second calcining step in a nitrogen atmosphere having an oxygen concentration of 500 ppm at 850°C without performing the first calcining step, as in Comparative Example 2. Accordingly, the method of giving the lithium iron oxide by performing both the first calcining step and the second calcining step is preferably employed. The oxygen concentration in the first calcining step and the second calcining step is more preferably 5 ppm or more, further preferably 30 ppm or more, particularly preferably 100 ppm or more, and most preferably 300 ppm or more. The oxygen concentration is more preferably 50000 ppm or less, further preferably 35000 ppm or less, particularly preferably 28000 ppm or less, and most preferably 10000 ppm or less.

The iron raw material to be used in the present invention is not limited, and iron(III) oxide hydroxide, iron(II) oxide, iron(III) oxide, ferrous(II) sulfate, ferric(III) sulfate, iron(II) hydroxide, iron(III) hydroxide, or the like is preferably used. Especially, at least one selected from the group consisting of iron(III) oxide hydroxide and iron(III) oxide is more preferably used.

The lithium raw material to be used in the present invention is not limited, and lithium hydroxide, lithium carbonate, lithium acetate, lithium nitrate, lithium oxide, or the like is preferably used. A hydrate or anhydrate thereof may be used. Especially, lithium hydroxide is more preferably used.

In the mixing step, the iron raw material and the lithium raw material are mixed together. A carbon raw material may be additionally mixed with the iron raw material and the lithium raw material. The mixing may be performed by a dry method or by a wet method, but is preferably performed by a dry method. Especially, the iron raw material and the lithium raw material each in a powder state are mixed together in a preferable embodiment; in the case that a carbon raw material is additionally contained, the iron raw material, the lithium raw material, and the carbon raw material each in a powder state are mixed together in a preferable embodiment. Li/Fe (mole ratio) in mixing the iron raw material and the lithium raw material is preferably 1.0 to 8.0.

In a preferable embodiment, the particle diameters and/or bulk densities of the raw materials are set within certain ranges in the mixing step. This allows the iron raw material and the lithium raw material to homogeneously react, and allows a calcined product after the first calcining step to be collected with ease. Moreover, the intensity ratio (I16.7/I23.6) between diffraction peak intensity at a diffraction angle ($2\theta$) of $16.7 \pm 0.5°$ (I16.7) and diffraction peak intensity at a diffraction angle ($2\theta$) of $23.6 \pm 0.5°$ (I23.6) and/or the intensity ratio (I43.5/I23.6) between diffraction peak intensity at diffraction angle ($2\theta$) of $43.5 \pm 0.5°$ (I43.5) and diffraction peak intensity at a diffraction angle ($2\theta$) of $23.6 \pm 0.5°$ (I23.6) can be controlled below a certain level.

From those viewpoints, the particle diameter of the iron raw material is preferably 30 $\mu$m or less, more preferably 28 $\mu$m or less, further preferably 25 $\mu$m or less, particularly preferably 22 $\mu$m or less, and most preferably 18 $\mu$m or less. The particle diameter of the iron raw material is preferably 0.5 $\mu$m or more. The particle diameter of the iron raw material is determined from median diameter obtained by determining particle size distribution with a laser diffraction particle size distribution analyzer (manufactured by NIKKISO CO., LTD., MICROTRAC MT-3000, refractivity of particles of iron(III) oxide: 2.94, refractivity of particles of iron(III) oxide hydroxide: 2.26). At that time, ion-exchanged water was used as a medium. The bulk density of the iron raw material is preferably 0.90 g/cm$^3$ or less, more preferably 0.88 g/cm$^3$ or less, further preferably 0.85 g/cm$^3$ or less, particularly preferably 0.82 g/cm$^3$ or less, and most preferably 0.78 g/cm$^3$ or less. The bulk density of the iron raw material is preferably 0.1 g/cm$^3$ or more. The bulk density of the iron raw material can be determined by filling a 20-ml graduated cylinder with the iron raw material and weighing the iron raw material. The particle diameter of the lithium raw material is preferably 100 $\mu$m or less, more preferably 80 $\mu$m or less, further preferably 60 $\mu$m or less, particularly preferably 50 $\mu$m or less, and most preferably 40 $\mu$m or less. The particle diameter of the lithium raw material is preferably 1 $\mu$m or more. The particle diameter of the lithium raw material can be determined from median diameter obtained by determining particle size distribution with a laser diffraction particle size distribution analyzer (manufactured by NIKKISO CO., LTD., MICROTRAC MT-3000, refractivity of particles: 1.46). At that time, isopropyl alcohol the moisture content of which had been adjusted to 2000 ppm or less by the Karl Fischer method was used as a medium.

In a preferable embodiment, the first calcining step is performed after the mixing step. Preferably employed in the first calcining step is a method of performing calcination in an inert gas atmosphere having an oxygen concentration of 1 to 52000 ppm in a low-temperature range for a specific time. For the inert gas, for example, nitrogen, argon, helium, neon, or krypton is preferably used. The calcining temperature in the first calcining step is preferably 350 to 650°C. If the calcining temperature is less than 350°C, unreacted raw materials may remain, and hence the lithium iron oxide represented by the formula (1) may be unsuccessfully obtained. The calcining temperature is more preferably 380°C or more, further preferably 420°C or more, particularly preferably 450°C or more, and most preferably 500°C or more. If the calcining temperature is more than 650°C, on the other hand, the sublimation or adhesion of the lithium source may occur, and hence lithium and iron may fail to homogenously react, and thus the calcining temperature is more preferably 620°C or less, further preferably 600°C or less, and particularly preferably 580°C or less.

The calcining time in the first calcining step is preferably 2 to 100 hours. If the calcining time is less than 2 hours, unreacted raw materials may remain, and hence the lithium iron oxide represented by the formula (1) may be unsuccessfully obtained. The calcining time is more preferably 3 hours or more, and further preferably 4 hours or more. If the calcining time is more than 100 hours, on the other hand, lower productivity may result. The calcining time is more preferably 90 hours or less.

In a preferable embodiment, a powdery product obtained through the first calcining step is pulverized. In pulverizing, at least one pulverizing machine selected from the group consisting of ball mills, planetary mills, mortar mills, jet mills, and pin mills is preferably used, and at least one pulverizing machine selected from the group consisting of ball mills and planetary mills is more preferably used. In particular, from the viewpoint of enhanced reactivity in the second calcining step, the powdery product obtained through the first calcining step is pulverized to give an average particle diameter (D50) below a specific range in a preferable embodiment. An average particle diameter (D50) of 15 $\mu$m or less is preferably employed for the powdery product obtained through the first calcining step. With the average particle diameter (D50) of the powdery product being 15 $\mu$m or less, enhanced reactivity is achieved in the second calcining step, and the lithium iron oxide represented by the formula (1) is successfully obtained. The average particle diameter (D50) of the powdery product obtained through the first calcining step is more preferably 10 $\mu$m or less, and further preferably 8 $\mu$m or less. The average particle diameter (D50) of the powdery product obtained through the first calcining step is preferably 1 $\mu$m or more. The term average particle diameter (D50) refers to median diameter obtained by determining particle size distribution with a laser diffraction particle size distribution analyzer (manufactured by NIKKISO CO., LTD., MICROTRAC MT-3000).

A method in which the second calcining step is then performed to give a lithium iron oxide is a preferable embodiment. Preferably employed in the second calcining step is a method of performing calcination in an inert gas atmosphere having an oxygen concentration of 1 to 52000 ppm in a high-temperature range for a specific time. For the inert gas, for example, nitrogen, argon, helium, neon, or krypton is preferably used. The calcining temperature in the second calcining step is preferably 700 to 1050°C. If the calcining temperature is less than 700°C, unreacted raw materials may remain, and hence the lithium iron oxide represented by the formula (1) may be unsuccessfully obtained. The calcining temperature is more preferably 720°C or more, further preferably 750°C or more, particularly preferably 780°C or more, and most preferably 820°C or more. If the calcining temperature is more than 1050°C, on the other hand, particles to be obtained may be coarse, causing difficulty in application to an electrode, and thus the calcining temperature is more preferably 1000°C or less, further preferably 980°C or less, and particularly preferably 950°C or less.

The calcining time in the second calcining step is preferably 2 to 100 hours. If the calcining time is less than 2 hours, unreacted raw materials may remain, and hence the lithium iron oxide represented by the formula (1) may be unsuccessfully obtained. The calcining time is more preferably 3 hours or more, and further preferably 4 hours or more. If the calcining time is more than 100 hours, on the other hand, lower productivity may result. The calcining time is more preferably 90 hours or less.

In another preferable embodiment, the powder of the lithium iron oxide obtained through the second calcining step is pulverized. The same pulverizing method as in pulverizing after the first calcining step is preferably employed. An average particle diameter (D50) in the range described above is preferably employed for the pre-doping agent. In another preferable embodiment, the pre-doping agent obtained through the pulverization is magnetically sorted to remove magnetic substances.

From the viewpoint of imparting electric conductivity, moisture resistance, and slurry stability in electrode production to the pre-doping agent, and from the viewpoint of reduction in interfacial resistance in applying to a solid-state battery, the pre-doping agent is covered with at least one covering material selected from the group consisting of an organosilicon compound, a fatty acid, lithium carbonate, a niobium compound, a zirconium compound, and a carbonaceous material in a preferable embodiment (hereinafter, occasionally referred to as "the covered pre-doping agent" or "the surface-treated pre-doping agent"). Specifically, a preferable embodiment is a pre-doping agent for a power storage device, the pre-doping agent being at least one selected from the group consisting of silica-covered lithium iron oxide, fatty-acid-covered lithium iron oxide, lithium-carbonate-covered lithium iron oxide, lithium-niobate-covered lithium iron oxide, lithium-zirconate-covered lithium iron oxide, and carbonaceous-material-covered lithium iron oxide. The whole surface of the pre-doping agent is preferably covered, but an uncovered part may be present in the surface of the pre-doping agent. In the present invention, the statement that the pre-doping agent is covered means that when the elements C, O, Si, Fe, Nb, and Zr are specifically measured with an X-ray photoelectron analyzer, the C, Si, Nb, or Zr element concentration is found to be above a certain level in the range from the outermost surface of the pre-doping agent to a depth of 1 nm. The element concentration is preferably 1% or more, more preferably 5% or more, further preferably 12% or more, even further preferably 15% or more, particularly preferably 20% or more, and most preferably 25% or more. The element concentration is normally 45% or less. Especially, the C element concentration is preferably 12% or more, and more preferably 15% or more. The Si element concentration is preferably 1% or more, and more preferably 3% or more. The Nb element concentration is preferably 1% or more, and more preferably 5% or more. The Zr element concentration is preferably 1% or more, and more preferably 5% or more.

X-ray photoelectron analysis was performed with the X-ray photoelectron spectrometer "ESCA3400" manufactured by Shimadzu Corporation. The bond energy of C1s, 284.6 eV, was used for correction. The measurement conditions are as follows.

(Measurement conditions)

- X-ray source: Mg-K$\alpha$ ray
- Filament voltage-current: 12 kV-15 mA
- Degree of vacuum: less than $1.0 \times 10^{-6}$ Pa
- Measurement range: 150 to 180 eV
- Measurement step: 0.1 eV
- Cumulative number: 3

As described above, the pre-doping agent is covered with the covering material in a preferable embodiment, whereas the covered pre-doping agent may have a lower L value for powder color because of the influence of the covering material such as a carbonaceous material. From this viewpoint, the L value for powder color of the covered pre-doping agent is preferably 10 to 90, more preferably 12 to 88, and further preferably 14 to 86.

The organosilicon compound is not limited as long as the surface of the pre-doping agent is covered with silica, and tetramethoxysilane, tetraethoxysilane, tetrabutoxysilane, methyltrimethoxysilane, ethyltrimethoxysilane, triethoxycaprylylsilane, vinyltriethoxysilane, or the like is preferably employed. Preferably employed as the fatty acid is a higher fatty acid having 10 to 24 carbon atoms such as lauric acid, myristic acid, palmitic acid, stearic acid, isostearic acid, oleic acid, and behenic acid. Preferably employed as the niobium compound is pentaethoxyniobium, pentapropoxyniobium, pentabutoxyniobium, or the like. Preferably employed as the zirconium compound is tetraethoxyzirconium, tetrapropoxyzirconium, tetrabutoxyzirconium, or the like. Preferably employed as the carbonaceous material is activated carbon, acetylene black, polyvinyl alcohol, carbon nanotube, carbon nanofiber, graphene, hard carbon, soft carbon, Ketjen black, or the like.

Any method may be used for covering the pre-doping agent without limitation, and the pre-doping agent can be covered by mixing the covering material and the pre-doping agent and calcining or the like, as necessary. The calcining temperature is preferably 300 to 600°C, and the calcining time is preferably 0.5 to 24 hours. Preferably employed as a method for covering the pre-doping agent with a fatty acid is a method of covering by wet-mixing a fatty acid and the pre-doping agent and performing vacuum distillation or the like in place of calcining. Preferably employed as a method for covering the pre-doping agent with lithium carbonate is a method of calcining the pre-doping agent in a carbon dioxide atmosphere having an oxygen concentration of 1 to 52000 ppm at 300 to 600°C, or a method of bubbling with carbon dioxide gas for the pre-doping agent in an organic solvent. Preferably employed as a method for covering the pre-doping agent with a niobium compound is a method of mixing a niobium compound, the pre-doping agent, and an optional lithium compound such as lithium methoxide, lithium ethoxide, lithium isopropoxide, and lithium tert-butoxide and heat-treating the resulting mixture at 300 to 600°C. Preferably employed as a method for covering the pre-doping agent with a zirconium compound is a method of mixing a zirconium compound, the pre-doping agent, and an optional lithium compound such as lithium methoxide, lithium ethoxide, lithium isopropoxide, and lithium tert-butoxide and heat-treating the resulting mixture at 300 to 600°C. The thus-covered pre-doping agent is appropriately pulverized in a preferable embodiment, and the above method for pulverizing the powdery product is preferably employed therefor.

Use of the lithium iron oxide obtained as described above as the pre-doping agent of the present invention for a power storage device allows pre-doping without metal lithium foil, and hence successfully prevents the lowering of volumetric energy density of power storage devices in combination with achieving reduced production cost, and successfully prevents the decomposition of electrolytic solutions by the capability of pre-doping with lithium ions at lower charging voltages; thus, the pre-doping agent for a power storage device with a very high irreversible capacity can be provided. Especially, a positive electrode for a power storage device, the positive electrode comprising the pre-doping agent of the present invention and a positive electrode active material, is a preferable embodiment. A material that is used for lithium ion batteries and lithium ion capacitors can be used as the positive electrode active material, and, for example, preferably used are: a layered rock-salt-type lithium oxide containing a transition metal element selected from Ni, Co, Mn, and Al; a spinel-type lithium oxide containing a transition metal element selected from Ni, Co, Mn, Ti, Fe, Cr, Zn, and Cu; an olivine-type lithium phosphate compound represented as $LiFePO_4$; and a carbon-based material such as activated carbon, acetylene black, Ketjen black, and graphene sheet. Examples of the layered rock-salt-type lithium oxide include $LiNiO_2$, $LiCoO_2$, $Li_2MnO_3$, $Li(Ni_{1/3}Co_{1/3}Mn_{1/3})O_2$, $Li(Ni_{0.5}Co_{0.2}Mn_{0.3})O_2$, $Li(Ni_{0.6}Co_{0.2}Mn_{0.2})O_2$, $Li(Ni_{0.8}Co_{0.1}Mn_{0.1})O_2$, and $Li(Ni_{0.8}Co_{0.15}Al_{0.05})O_2$, and examples of the spinel-type lithium oxide include $LiMn_2O_4$ and $LiMn_{1.5}Ni_{0.5}O_4$.

The pre-doping agent content of the positive electrode is preferably 1 to 60% by weight to the total weight of the pre-doping agent and the positive electrode active material. If the pre-doping agent content is less than 1% by weight, a low irreversible capacity results and the potential of a negative electrode such as graphite and silicon may be unsuccessfully lowered, and thus the pre-doping agent content is more preferably 2% by weight or more, and further preferably 5% by weight or more. If the pre-doping agent content is more than 60% by weight, on the other hand, reduction in energy density may be caused by the lower content ratio of the positive electrode active material, and thus the pre-doping agent content is more preferably 55% by weight or less, and further preferably 45% by weight or less.

A power storage device comprising the positive electrode as a component is a more preferable embodiment of the present invention. A carbon-based material such as graphite and activated carbon, a silicon-based material such as silicon and silicon monoxide, a metal material such as tin, aluminum, and germanium, or sulfur can be preferably used as a negative electrode in the power storage device. As an electrolyte in the power storage device, for example, an electrolytic solution (liquid electrolyte) obtained by dissolving a lithium salt such as $LiPF_6$, $LiBF_4$, and $LiClO_4$ in an organic solvent or a solid electrolyte can be preferably used. The power storage device may be of any type without limitation, and at least one power storage device selected from the group consisting of lithium ion batteries, solid-state batteries, lithium ion capacitors, and electric double-layer capacitors is preferable. Especially, at least one power storage device selected from the group consisting of lithium ion batteries and lithium ion capacitors is more preferable. Among the lithium ion capacitors, a graphite-based lithium ion capacitor, in which graphite is used as a negative electrode, is a more preferable embodiment.

When being present between a positive electrode and a negative electrode, the pre-doping agent of the present invention can exert the effects as a pre-doping agent. For example, the pre-doping agent is applied onto the surface of a positive electrode, applied onto the surface of a separator, or contained in a separator. In the case that the pre-doping agent is applied onto the surface of a separator to form a pre-doping agent layer, a slurry is produced by mixing the pre-doping agent, a solvent, and a binder or the like, a separator is coated with the slurry by using a coater, and the solvent is removed by drying; as a result, the pre-doping agent layer is successfully formed. Although the pre-doping agent layer may be formed on either face of a separator, the pre-doping agent layer is preferably formed in closer proximity of the positive electrode active material layer. Specifically, when a positive electrode and a negative electrode has been disposed via a separator, it is suitable that the pre-doping agent layer is formed on the face facing the positive electrode. The pre-doping agent layer may be formed not on either one face of a separator but on each face thereof.

Examples

The following more specifically describes the present invention with examples.

[Production of iron(III) oxide hydroxide]

With ferric sulfate solution (manufactured by JUJO Synthetic Chemistry Labo.), 1.5 L of 0.5 mol/L aqueous solution of ferric sulfate was prepared, 500 g of 24 wt% aqueous ammonia was added to the aqueous solution prepared, and the resultant was stirred at 50°C for 30 minutes to give a suspension. The suspension obtained was further filtered, washed with water, and dried at 80°C overnight to give iron(III) oxide hydroxide.

[Production of iron(III) oxide]

The iron(III) oxide hydroxide was heat-treated in the atmosphere at 650°C for 2 hours to give iron(III) oxide.

[Production of pre-doping agents (LFO)]

(Example 1)

With use of a mixer, 100 g of the iron(III) oxide prepared (pulverized to reach a particle diameter of 15 $\mu$m, bulk density: 0.70 g/cm$^3$) and 184 g of lithium hydroxide monohydrate (manufactured by FUJIFILM Wako Pure Chemical Corporation, pulverized to reduce the particle diameter of 285 $\mu$m to 18 $\mu$m) were dry-mixed together. The resulting dry mixture was calcined with a calcination furnace in a nitrogen atmosphere having an oxygen concentration of 500 ppm at 550°C for 4 hours to give a powdery product as a first calcined product (Li/Fe = 3.5 (mole ratio)). Then, anhydrous lithium hydroxide was added to the powdery product obtained as a first calcined product to reach Li/Fe = 5.2 (mole ratio), and the resultant was pulverized and mixed with a dry bead mill. The resulting pulverized mixture of the first calcined product (particle diameter: 5 $\mu$m) was calcined with a calcination furnace in a nitrogen atmosphere having an oxygen concentration of 500 ppm at 900°C for 4 hours, and the resulting powdery product as a second calcined product was pulverized to give a lithium iron oxide (Li/Fe = 5.2 (mole ratio)) as a pre-doping agent in Example 1.

(Example 2)

With use of a mixer, 100 g of the iron(III) oxide prepared (pulverized to reach a particle diameter of 16 $\mu$m, bulk density: 0.73 g/cm$^3$) and 184 g of lithium hydroxide monohydrate (manufactured by FUJIFILM Wako Pure Chemical Corporation, pulverized to reduce the particle diameter of 285 $\mu$m to 18 $\mu$m) were dry-mixed together. The resulting dry mixture was calcined with a calcination furnace in a nitrogen atmosphere having an oxygen concentration of 500 ppm at 550°C for 4 hours to give a powdery product as a first calcined product (Li/Fe = 3.5 (mole ratio)). Then, anhydrous lithium hydroxide was added to the powdery product obtained as a first calcined product to reach Li/Fe = 5.6 (mole ratio), and the resultant was pulverized and mixed with a dry bead mill. The resulting pulverized mixture of the first calcined product (particle diameter: 6 $\mu$m) was calcined with a calcination furnace in a nitrogen atmosphere having an oxygen concentration of 500 ppm at 900°C for 4 hours, and the resulting powdery product as a second calcined product was pulverized to give a lithium iron oxide (Li/Fe = 5.6 (mole ratio)) as a pre-doping agent in Example 2.

(Example 3)

With use of a mixer, 100 g of the iron(III) oxide prepared (pulverized to reach a particle diameter of 15 $\mu$m, bulk density: 0.70 g/cm$^3$) and 184 g of lithium hydroxide monohydrate (manufactured by FUJIFILM Wako Pure Chemical Corporation, pulverized to reduce the particle diameter of 285 $\mu$m to 22 $\mu$m) were dry-mixed together. The resulting dry mixture was calcined with a calcination furnace in a nitrogen atmosphere having an oxygen concentration of 500 ppm at 550°C for 4 hours to give a powdery product as a first calcined product (Li/Fe = 3.5 (mole ratio)). Then, anhydrous lithium hydroxide was added to the powdery product obtained as a first calcined product to reach Li/Fe = 6.0 (mole ratio), and the resultant was pulverized and mixed with a dry bead mill. The resulting pulverized mixture of the first calcined product (particle diameter: 3 $\mu$m) was calcined with a calcination furnace in a nitrogen atmosphere having an oxygen concentration of 500 ppm at 900°C for 4 hours, and the resulting powdery product as a second calcined product was pulverized to give a lithium iron oxide (Li/Fe = 6.0 (mole ratio)) as a pre-doping agent in Example 3.

(Example 4)

With use of a mixer, 100 g of the iron(III) oxide prepared (pulverized to reach a particle diameter of 15 $\mu$m, bulk density: 0.70 g/cm$^3$) and 184 g of lithium hydroxide monohydrate (manufactured by FUJIFILM Wako Pure Chemical Corporation, pulverized to reduce the particle diameter of 285 $\mu$m to 18 $\mu$m) were dry-mixed together. The resulting dry mixture was calcined with a calcination furnace in a nitrogen atmosphere having an oxygen concentration of 500 ppm at 550°C for 4 hours to give a powdery product as a first calcined product (Li/Fe = 3.5 (mole ratio)). Then, anhydrous lithium hydroxide was added to the powdery product obtained as a first calcined product to reach Li/Fe = 7.0 (mole ratio), and the resultant was pulverized and mixed with a dry bead mill. The resulting pulverized mixture of the first calcined product (particle diameter: 5 $\mu$m) was calcined with a calcination furnace in a nitrogen atmosphere having an oxygen concentration of 500 ppm at 900°C for 4 hours, and the resulting powdery product as a second calcined product was pulverized to give a lithium iron oxide (Li/Fe = 7.0 (mole ratio)) as a pre-doping agent in Example 4.

(Example 5)

With use of a mixer, 100 g of the iron(III) oxide prepared (pulverized to reach a particle diameter of 15 $\mu$m, bulk density: 0.70 g/cm$^3$) and 184 g of lithium hydroxide monohydrate (manufactured by FUJIFILM Wako Pure Chemical Corporation, pulverized to reduce the particle diameter of 285 $\mu$m to 18 $\mu$m) were dry-mixed together. The resulting dry mixture was calcined with a calcination furnace in a nitrogen atmosphere having an oxygen concentration of 500 ppm at 550°C for 4 hours to give a powdery product as a first calcined product (Li/Fe = 3.5 (mole ratio)). Then, anhydrous lithium hydroxide was added to the powdery product obtained as a first calcined product to reach Li/Fe = 8.0 (mole ratio), and the resultant was pulverized and mixed with a dry bead mill. The resulting pulverized mixture of the first calcined product (particle diameter: 5 $\mu$m) was calcined with a calcination furnace in a nitrogen atmosphere having an oxygen concentration of 500 ppm at 900°C for 4 hours, and the resulting powdery product as a second calcined product was pulverized to give a lithium iron oxide (Li/Fe = 8.0 (mole ratio)) as a pre-doping agent in Example 5.

(Example 6)

With use of a mixer, 100 g of the iron(III) oxide prepared (pulverized to reach a particle diameter of 5 $\mu$m, bulk density: 0.28 g/cm$^3$) and 184 g of lithium hydroxide monohydrate (manufactured by FUJIFILM Wako Pure Chemical Corporation, pulverized to reduce the particle diameter of 285 $\mu$m to 20 $\mu$m) were dry-mixed together. The resulting dry mixture was calcined with a calcination furnace in a nitrogen atmosphere having an oxygen concentration of 500 ppm at 550°C for 4 hours to give a powdery product as a first calcined product (Li/Fe = 3.5 (mole ratio)). Then, anhydrous lithium hydroxide was added to the powdery product obtained as a first calcined product to reach Li/Fe = 5.6 (mole ratio), and the resultant was pulverized and mixed with a dry bead mill. The resulting pulverized mixture of the first calcined product (particle diameter: 4 $\mu$m) was calcined with a calcination furnace in a nitrogen atmosphere having an oxygen concentration of 500 ppm at 900°C for 4 hours, and the resulting powdery product as a second calcined product was pulverized to give a lithium iron oxide (Li/Fe = 5.6 (mole ratio)) as a pre-doping agent in Example 6.

(Example 7)

With use of a mixer, 100 g of the iron(III) oxide prepared (pulverized to reach a particle diameter of 2 $\mu$m, bulk density: 0.16 g/cm$^3$) and 184 g of lithium hydroxide monohydrate (manufactured by FUJIFILM Wako Pure Chemical Corporation, pulverized to reduce the particle diameter of 285 $\mu$m to 21 $\mu$m) were dry-mixed together. The resulting dry mixture was calcined with a calcination furnace in a nitrogen atmosphere having an oxygen concentration of 500 ppm at 550°C for 4 hours to give a powdery product as a first calcined product (Li/Fe = 3.5 (mole ratio)). Then, anhydrous lithium hydroxide was added to the powdery product obtained as a first calcined product to reach Li/Fe = 5.6 (mole ratio), and the resultant was pulverized and mixed with a dry bead mill. The resulting pulverized mixture of the first calcined product (particle diameter: 4 $\mu$m) was calcined with a calcination furnace in a nitrogen atmosphere having an oxygen concentration of 500 ppm at 900°C for 4 hours, and the resulting powdery product as a second calcined product was pulverized to give a lithium iron oxide (Li/Fe = 5.6 (mole ratio)) as a pre-doping agent in Example 7.

(Example 8)

With use of a mixer, 100 g of the iron(III) oxide prepared (pulverized to reach a particle diameter of 15 $\mu$m, bulk density: 0.70 g/cm$^3$) and 184 g of lithium hydroxide monohydrate (manufactured by FUJIFILM Wako Pure Chemical Corporation, pulverized to reduce the particle diameter of 285 $\mu$m to 7 $\mu$m) were dry-mixed together. The resulting dry mixture was calcined with a calcination furnace in a nitrogen atmosphere having an oxygen concentration of 500 ppm at 550°C for 4 hours to give a powdery product as a first calcined product (Li/Fe = 3.5 (mole ratio)). Then, anhydrous lithium hydroxide was added to the powdery product obtained as a first calcined product to reach Li/Fe = 5.6 (mole ratio), and the resultant was pulverized and mixed with a dry bead mill. The resulting pulverized mixture of the first calcined product (particle diameter: 5 $\mu$m) was calcined with a calcination furnace in a nitrogen atmosphere having an oxygen concentration of 500 ppm at 900°C for 4 hours, and the resulting powdery product as a second calcined product was pulverized to give a lithium iron oxide (Li/Fe = 5.6 (mole ratio)) as a pre-doping agent in Example 8.

(Example 9)

With use of a mixer, 100 g of the iron(III) oxide hydroxide prepared (pulverized to reach a particle diameter of 14 $\mu$m, bulk density: 0.68 g/cm$^3$) and 165 g of lithium hydroxide monohydrate (manufactured by FUJIFILM Wako Pure Chemical Corporation, pulverized to reduce the particle diameter of 285 $\mu$m to 18 $\mu$m) were dry-mixed together. The resulting dry mixture was calcined with a calcination furnace in a nitrogen atmosphere having an oxygen concentration of 500 ppm at 550°C for 4 hours to give a powdery product as a first calcined product (Li/Fe = 3.5 (mole ratio)). Then, anhydrous lithium hydroxide was added to the powdery product obtained as a first calcined product to reach Li/Fe = 5.6 (mole ratio), and the resultant was pulverized and mixed with a dry bead mill. The resulting pulverized mixture of the first calcined product (particle diameter: 5 $\mu$m) was calcined with a calcination furnace in a nitrogen atmosphere having an oxygen concentration of 500 ppm at 900°C for 4 hours, and the resulting powdery product as a second calcined product was pulverized to give a lithium iron oxide (Li/Fe = 5.6 (mole ratio)) as a pre-doping agent in Example 9.

(Example 10)

With use of a mixer, 100 g of the iron(III) oxide prepared (pulverized to reach a particle diameter of 15 $\mu$m, bulk density: 0.70 g/cm$^3$) and 53 g of lithium hydroxide monohydrate (manufactured by FUJIFILM Wako Pure Chemical Corporation, pulverized to reduce the particle diameter of 285 $\mu$m to 18 $\mu$m) were dry-mixed together. The resulting dry mixture was calcined with a calcination furnace in a nitrogen atmosphere having an oxygen concentration of 500 ppm at 550°C for 4 hours to give a powdery product as a first calcined product (Li/Fe = 1.0 (mole ratio)). Then, anhydrous lithium hydroxide was added to the powdery product obtained as a first calcined product to reach Li/Fe = 5.6 (mole ratio), and the resultant was pulverized and mixed with a dry bead mill. The resulting pulverized mixture of the first calcined product (particle diameter: 4 $\mu$m) was calcined with a calcination furnace in a nitrogen atmosphere having an oxygen concentration of 500 ppm at 900°C for 4 hours, and the resulting powdery product as a second calcined product was pulverized to give a lithium iron oxide (Li/Fe = 5.6 (mole ratio)) as a pre-doping agent in Example 10.

(Example 11)

With use of a mixer, 100 g of the iron(III) oxide prepared (pulverized to reach a particle diameter of 15 $\mu$m, bulk

density: 0.70 g/cm$^3$) and 263 g of lithium hydroxide monohydrate (manufactured by FUJIFILM Wako Pure Chemical Corporation, pulverized to reduce the particle diameter of 285 $\mu$m to 18 $\mu$m) were dry-mixed together. The resulting dry mixture was calcined with a calcination furnace in a nitrogen atmosphere having an oxygen concentration of 500 ppm at 550°C for 4 hours to give a powdery product as a first calcined product (Li/Fe = 5.0 (mole ratio)). Then, anhydrous lithium hydroxide was added to the powdery product obtained as a first calcined product to reach Li/Fe = 5.6 (mole ratio), and the resultant was pulverized and mixed with a dry bead mill. The resulting pulverized mixture of the first calcined product (particle diameter: 5 $\mu$m) was calcined with a calcination furnace in a nitrogen atmosphere having an oxygen concentration of 500 ppm at 900°C for 4 hours, and the resulting powdery product as a second calcined product was pulverized to give a lithium iron oxide (Li/Fe = 5.6 (mole ratio)) as a pre-doping agent in Example 11.

(Example 12)

In a dry room with the dewpoint kept at -30°C, 50 g of the lithium iron oxide produced in Example 9 and 5 g of tetraethoxysilane (manufactured by Shin-Etsu Chemical Co., Ltd., KBM-04), was mixed with use of a tabletop blender (manufactured by Iwatani Corporation, Labo Milser Plus) for 20 minutes, and the resulting treated powder was dried with a dryer at 150°C for 3 hours. The resulting dried product was pulverized with use of a mortar to give a surface-treated lithium iron oxide (Li/Fe = 5.6 (mole ratio)) as a pre-doping agent in Example 12. The Si content of the pre-doping agent in Example 12 was determined by using an X-ray fluorescence analyzer (manufactured by Rigaku Corporation, Supermini), and Si/Fe (mole ratio) was found to be 0.066. The element concentrations of the pre-doping agent in Example 12 from the outermost surface to a depth of 1 nm were determined by using an X-ray photoelectron analyzer, and the Si element concentration was found to be 3%.

(Example 13)

In a dry room with the dewpoint kept at -30°C, 50 g of the lithium iron oxide produced in Example 9 and 3 g of acetylene black (manufactured by Denka Company Limited, DENKA BLACK) were added into a 500-mL polypropylene container containing 10-mm and 5-mm zirconia balls, and pulverized and mixed by using a pot mill rotating table (manufactured by NITTO KAGAKU CO., Ltd., ANZ-100S) for 3 hours to give a surface-treated lithium iron oxide (Li/Fe = 5.6 (mole ratio)) as a pre-doping agent in Example 13. The carbon content of the pre-doping agent in Example 13 was determined by using a carbon content analyzer (manufactured by J-Science Lab Co., Ltd., JMA-1000), and found to be 5.9 wt%. The element concentrations of the pre-doping agent in Example 13 from the outermost surface to a depth of 1 nm were determined by using an X-ray photoelectron analyzer, and the C element concentration was found to be 20%.

(Example 14)

In a dry room with the dewpoint kept at -30°C, 50 g of the lithium iron oxide produced in Example 9, 1.1 g of lithium ethoxide (manufactured by Sigma-Aldrich Co. LLC), and 6.7 g of pentaethoxyniobium (manufactured by KANTO CHEMICAL CO., INC.) were mixed with use of a tabletop blender (manufactured by Iwatani Corporation, Labo Milser Plus) for 20 minutes, and the resulting treated powder was dried with a dryer at 400°C for 0.5 hours. The resulting dried product was pulverized with use of a mortar to give a surface-treated lithium iron oxide (Li/Fe = 5.7 (mole ratio)) as a pre-doping agent in Example 14. The Nb content of the pre-doping agent in Example 14 was determined by using an X-ray fluorescence analyzer (manufactured by Rigaku Corporation, Supermini), and Nb/Fe (mole ratio) was found to be 0.065. The element concentrations of the pre-doping agent in Example 14 from the outermost surface to a depth of 1 nm were determined by using an X-ray photoelectron analyzer, and the Nb element concentration was found to be 6%.

(Comparative Example 1)

With use of a mixer, 100 g of the iron(III) oxide prepared (pulverized to reach a particle diameter of 15 $\mu$m, bulk density: 0.70 g/cm$^3$) and 263 g of lithium hydroxide monohydrate (manufactured by FUJIFILM Wako Pure Chemical Corporation, pulverized to reduce the particle diameter of 285 $\mu$m to 18 $\mu$m) were dry-mixed together. The resulting dry mixture was calcined with a calcination furnace in a nitrogen atmosphere having an oxygen concentration of 500 ppm at 900°C for 4 hours, and the resulting powdery product was pulverized to give a lithium iron oxide (Li/Fe = 5.0 (mole ratio)) as a pre-doping agent in Comparative Example 1.

(Comparative Example 2)

With use of a mixer, 100 g of the iron(III) oxide prepared (pulverized to reach a particle diameter of 15 $\mu$m, bulk density: 0.70 g/cm$^3$) and 273 g of lithium hydroxide monohydrate (manufactured by FUJIFILM Wako Pure Chemical Corporation, pulverized to reduce the particle diameter of 285 $\mu$m to 18 $\mu$m) were dry-mixed together. The resulting dry mixture was calcined with a calcination furnace in a nitrogen atmosphere having an oxygen concentration of 500 ppm at 900°C for 4 hours, and the resulting powdery product was pulverized to give a lithium iron oxide (Li/Fe = 5.2 (mole ratio)) as a pre-doping agent in Comparative Example 2.

(Comparative Example 3)

With use of a mixer, 100 g of the iron(III) oxide prepared (pulverized to reach a particle diameter of 15 $\mu$m, bulk density: 0.70 g/cm$^3$) and 294 g of lithium hydroxide monohydrate (manufactured by FUJIFILM Wako Pure Chemical Corporation, pulverized to reduce the particle diameter of 285 $\mu$m to 18 $\mu$m) were dry-mixed together. The resulting dry mixture was calcined with a calcination furnace in a nitrogen atmosphere having an oxygen concentration of 500 ppm at 900°C for 4 hours, and the resulting powdery product was pulverized to give a lithium iron oxide (Li/Fe = 5.6 (mole ratio)) as a pre-doping agent in Comparative Example 3.

[Evaluation of pre-doping agents]

In the following evaluation of the pre-doping agents, measurements were performed in a dry room with a dewpoint of -20°C or less or in an inert gas atmosphere of nitrogen or argon, unless otherwise stated.

(Composition analysis)

The Li/Fe mole ratios and $SO_3$ contents of the pre-doping agents obtained in the examples and comparative examples were measured by ICP atomic emission spectroscopy with the plasma atomic emission spectrometer "SPECTRO ARCOS" manufactured by Hitachi High-Tech Science Corporation. The results are shown in Table 2.

(Calculation of crystal lattice constants, lattice volume, half width, and peak intensity ratio)

Peak positions and half widths were determined for the pre-doping agents obtained in the examples and comparative examples by using the XRD apparatus "Empyrean" manufactured by Malvern Panalytical Ltd. with a Cu-K$\alpha$ ray. The measurement was performed in the atmosphere with a dome-shaped sample folder for air-sensitive samples, the sample folder manufactured by Malvern Panalytical Ltd. At that time, Si powder (manufactured by KATAYAMA CHEMICAL INDUSTRIES Co., Ltd.) as an internal standard was mixed with each pre-doping agent at a weight ratio of 5 wt% for the measurement. Analytical software (HighScore Plus) was used for refinement of crystal lattice constants and lattice volume. In the analysis, peak positions were corrected with reference to the peak for Si(111), and the Rietveld analysis (<Phase fit> Default Rietveld) was then performed with $Li_5FeO_4$ (ICSD: 01-075-1253) as an approximate structure model to calculate crystal lattice constants and lattice volume V. The results are shown in Table 2.

(Method for measuring specific surface area)

The specific surface areas of the pre-doping agents obtained in the examples and comparative examples were measured by the BET method with a full-automatic specific surface area analyzer (manufactured by Mountech Co., Ltd., Macsorb HM model-1208). The degassing process was performed under conditions of 150°C-20 minutes. The results are shown in Table 3.

(Method for measuring volume resistivity)

The volume resistivities of the pre-doping agents obtained in the examples and comparative examples were measured with a high-resistivity meter (manufactured by Mitsubishi Chemical Analytech Co., Ltd., Hiresta-UX). Results were calculated on the basis of resistance values at 5 kN. The results are shown in Table 3.

(Method for measuring particle size distribution)

The average particle diameters (D50) of the pre-doping agents obtained in the examples and comparative examples were measured with a particle size distribution analyzer (manufactured by NIKKISO CO., LTD., MICROTRAC MT-3000). At that time, isopropyl alcohol the moisture content of which had been adjusted to 2000 ppm or less by the Karl Fischer method was used as a medium, and the measurement was performed for the pre-doping agents that had been dispersed by irradiating with an ultrasonic wave at an output of 40 W for 30 seconds. The results are shown in Table 3.

(Particle size distribution indices D10/D50 and D90/D50)

The particle diameters D10, D50, and D90 of the pre-doping agents obtained in the examples and comparative examples were measured with a particle size distribution analyzer (manufactured by NIKKISO CO., LTD., MICROTRAC MT-3000). At that time, isopropyl alcohol the moisture content of which had been adjusted to 2000 ppm or less by the Karl Fischer method was used as a medium, and the measurement was performed for the pre-doping agents that had been dispersed by irradiating with an ultrasonic wave at an output of 40 W for 30 seconds. From the values of particle diameters D10, D50, and D90 obtained, the particle size distribution indices D10/D50 and D90/D50 were calculated. The results are shown in Table 3.

(Tap density)

To examine the powder densities of the pre-doping agents obtained in the examples and comparative examples, each pre-doping agent was put in a 20-ml graduated cylinder to fill it, and tapped 200 times with a TAPDENSER, KYT-4000 manufactured by Seishin Enterprise Co., Ltd. The filling volume after the tapping was read, and the tap density was calculated from that volume and the weight of the filling pre-doping agent. The results are shown in Table 3.

[Evaluation of power storage devices]

(Production of coin batteries for electrochemical evaluation)

For every pre-doping agent obtained in the examples and comparative examples, a slurry was prepared by dissolving 58 wt% of the pre-doping agent, 30 wt% of acetylene black ("DENKA BLACK" manufactured by Denka Company Limited) as a conductive assistant, and 12 wt% of polyvinylidene fluoride (PVDF, "KF Polymer" manufactured by KUREHA CORPORATION) as a binder in N-methylpyrrolidone. The slurry was applied onto an etched aluminum foil (JCC-20CB manufactured by JAPAN CAPACITOR INDUSTRIAL CO., LTD.) as a current collector, and dried at 120°C for 5 minutes. The dried sheet was stamped with a stamping machine to produce an electrode (positive electrode) for evaluation. For the counter electrode, metal lithium as a stamped product of a metal lithium foil was used. A separator made of polypropylene was sandwiched between the electrode for evaluation and the counter electrode to constitute electrodes, which were placed in a coin-shaped battery container. Thereafter, an electrolytic solution obtained by dissolving 1 M $LiPF_6$ in a mixed solvent as a mixture of ethylene carbonate (EC) and diethyl carbonate (DEC) at a volume ratio of EC:DEC = 1:1 was injected, and the battery container was sealed; thus, a coin battery for electrochemical evaluation was produced.

(Charge/discharge test)

Each of the coin batteries produced was subjected to constant current charging at a current density of 11.7 mA/g (per weight of pre-doping agent) until a charge termination voltage of 4.3 V was reached, and then to constant voltage charging (end condition: a current value of 3.25 mA/g (per weight of pre-doping agent)). After that, a 3-minute pausing followed. Then, constant current discharging was performed at a current density of 13.0 mA/g (per weight of pre-doping agent) until a voltage of 3.0 V was reached. The values of charge capacity, discharge capacity, and irreversible capacity obtained are shown in Table 3.

(Elution of metal ions into electrolytic solution)

For every pre-doping agent obtained in the examples and comparative examples, 2.0 g of the pre-doping agent was added to 18.0 g of an electrolytic solution obtained by dissolving 1 M $LiPF_6$ in a mixed solvent as a mixture of ethylene carbonate (EC) and diethyl carbonate (DEC) at a volume ratio of EC:DEC = 1:1, and the resultant was stored in a thermostatic chamber at 50°C for a week. Thereafter, the electrolytic solution was collected through a membrane filter, dried in an aluminum crucible at 100°C for 24 hours, and then calcined at 800°C for 12 hours. Subsequently, 3 mL of 35% hydrochloric acid was added to the aluminum crucible, which was left to stand for 30 minutes or more, and ion-exchanged water was added until a total volume of 20 mL was reached. After that, the resultant was 1000-fold-diluted, and 100 mL of a test solution was obtained. The iron ion concentration of the test solution was measured by ICP atomic emission spectroscopy, and the fraction of iron ions eluted from the pre-doping agent was regarded as the iron ion elution rate, which was calculated with an expression shown below. The results are shown in Table 3.

Iron ion elution rate % = Iron ion concentration of test solution [mg/L] $\times$ 0.1 [L] $\times$ 1000 $\times$ 100/(2.0 [g] $\times$ 1000 [mg/g])

(Elution of lithium ions)

For every pre-doping agent obtained in the examples and comparative examples, 1.0 g of the pre-doping agent and 20 ml of N-methyl-2-pyrrolidone were added to a 30-mL screw tube, and stirred with a stirrer under conditions of 1000 rpm and a temperature of 20°C overnight. After that, the solution was collected through a 0.2-$\mu$m membrane filter, and a 5-ml portion of the solution collected was 10-fold-diluted with 2-propanol. The lithium ion concentration of the diluted solution was measured by ion chromatography (ICS-2100 manufactured by Dionex), and the elution of lithium ions from the pre-doping agent was calculated. The results are shown in Table 3.

(Measurement of L values for powder color in Lab color system)

Each of the pre-doping agents obtained in the examples and comparative examples was formed into a pellet with a press machine, and the L value for powder color when specularly reflected light was removed was measured with a spectrophotometer (CM-2500d manufactured by KONICA MINOLTA, INC.). The pellet was produced under conditions such that a 35$\varphi$ aluminum ring was filled with 4 g of the pre-doping agent and the resultant was pressed at a force of 50 kN for 30 seconds. The results are shown in Table 3.

(Production of and pre-doping treatment for lithium ion batteries)

Lithium ion batteries were produced with the pre-doping agents obtained in the examples and comparative examples, and subjected to pre-doping treatment. In the production process for lithium ion batteries, the lithium ion batteries were produced in a dry room with a dewpoint of -20°C or less or in an inert gas atmosphere of nitrogen or argon, unless otherwise stated.

(Production Example 1)

(Production of positive electrode)

First, a positive electrode coating material was produced by dissolving $Li(Ni_{0.5}Co_{0.2}Mn_{0.3})O_2$ (manufactured by Hohsen Corp.) as a positive electrode active material, the pre-doping agent in Example 1 as a pre-doping agent, acetylene black ("DENKA BLACK" manufactured by Denka Company Limited) as a conductive assistant, and polyvinylidene fluoride (PVDF, "KF Polymer" manufactured by KUREHA CORPORATION) as a binder in N-methylpyrrolidone.
At that time, the pre-doping agent content was adjusted to 10% to the total mass of the positive electrode active material and the pre-doping agent, as shown in the following expression.

Pre-doping agent content (%) = [Mass of pre-doping agent/(Mass of positive electrode active material + Mass of pre-doping agent)] $\times$ 100

Furthermore, the mass ratio of total of positive electrode active material and pre-doping agent/conductive assistant/binder was adjusted to 90/5/5. That is, the mass ratio of positive electrode active material/pre-doping agent/conductive assistant/binder was adjusted to 81/9/5/5.
Finally, the positive electrode coating material produced was applied onto an etched aluminum foil ("JCC-20CB" manufactured by JAPAN CAPACITOR INDUSTRIAL CO., LTD.) as a current collector, and dried at 120°C for 5 minutes, and the resultant was then cut into a size of 3 cm $\times$ 4 cm; thus a positive electrode was produced. The design capacity at that time was 15.6 mAh.

(Production of negative electrode)

A spherulite graphite electrode ("HS-LIB-N-Gr-001" manufactured by Hohsen Corp., nominal capacity: 1.6 mAh/cm$^2$) was used for a negative electrode, and a negative electrode was produced by cutting this into a size of 3.3 cm $\times$ 4.3 cm. The design capacity at that time was 22.7 mAh.

(Production of lithium ion battery)

The positive electrode and negative electrode produced above and a polyethylene separator were laminated, and the laminate was then housed in an aluminum laminate case.
Next, 1 M $LiPF_6$ in EC:DEC (v/v = 1/1) (Japan Carlit Co., Ltd.) as an electrolytic solution was injected, and vacuum sealing was then performed; thus, a lithium ion battery in the present production example was produced.

The electric capacities of the positive electrode and negative electrode of the lithium ion battery in the present production example were 15.6 mAh and 22.7 mAh, respectively, and the capacity ratio between the positive and negative electrodes (negative electrode/positive electrode) was 1.5.

(Pre-doping treatment)

The lithium ion battery produced in Production Example 1 was subjected to constant current charging with a charge/discharge analyzer (manufactured by Hokuto Denko) at a current density of 0.02 mA/cm$^2$ in an environment at 25°C until 4.3 V was reached, and then to constant voltage charging (end condition: a current value of 0.007 mA/cm$^2$). After that, a 3-minute pausing followed. Then, pre-doping treatment was performed by discharging until 3.0 V was reached.

(Evaluation of battery characteristics)

The lithium ion batteries in the production examples and comparative production examples were evaluated on battery characteristics. Specifically, charging and discharging were performed with a charge/discharge analyzer (manufactured by Hokuto Denko) in the range of 3.0 to 4.3 V in an environment at 25°C. The charge/discharge rate was 1 C per weight of the positive electrode active material. The current density at the charge/discharge rate of 1 C was 160 mA/g (per weight of active material).

In the evaluation of the battery characteristics, 10 batteries were produced for each set of conditions. The short circuit rate was calculated from the number of short-circuited cells of the 10 cells subjected to measurement; the short circuit rates are shown in Table 3.

[Table 1]

| | Iron raw material | Iron raw material particle diameter μm | Iron raw material bulk density g/cm$^3$ | Lithium raw material | Lithium raw material particle diameter μm | First calcined product Li/Fe mole ratio | First calcined product particle diameter μm |
|---|---|---|---|---|---|---|---|
| Example 1 | Iron(III) oxide | 15 | 0.70 | Lithium hydroxide | 18 | 3.5 | 5 |
| Example 2 | Iron(III) oxide | 16 | 0.73 | Lithium hydroxide | 18 | 3.5 | 6 |
| Example 3 | Iron(III) oxide | 15 | 0.70 | Lithium hydroxide | 22 | 3.5 | 3 |
| Example 4 | Iron(III) oxide | 15 | 0.70 | Lithium hydroxide | 18 | 3.5 | 5 |
| Example 5 | Iron(III) oxide | 15 | 0.70 | Lithium hydroxide | 18 | 3.5 | 5 |
| Example 6 | Iron(III) oxide | 5 | 0.28 | Lithium hydroxide | 20 | 3.5 | 4 |
| Example 7 | Iron(III) oxide | 2 | 0.16 | Lithium hydroxide | 21 | 3.5 | 4 |
| Example 8 | Iron(III) oxide | 15 | 0.70 | Lithium hydroxide | 7 | 3.5 | 5 |
| Example 9 | Iron(III) oxide hydroxide | 14 | 0.68 | Lithium hydroxide | 18 | 3.5 | 5 |
| Example 10 | Iron(III) oxide | 15 | 0.70 | Lithium hydroxide | 18 | 1.0 | 4 |
| Example 11 | Iron(III) oxide | 15 | 0.70 | Lithium hydroxide | 18 | 5.0 | 5 |

(continued)

| | Iron raw material | Iron raw material particle diameter μm | Iron raw material bulk density g/cm$^3$ | Lithium raw material | Lithium raw material particle diameter μm | First calcined product Li/Fe mole ratio | First calcined product particle diameter μm |
|---|---|---|---|---|---|---|---|
| Example 12 | Iron(III) oxide hydroxide | 14 | 0.68 | Lithium hydroxide | 18 | 3.5 | 5 |
| Example 13 | Iron(III) oxide hydroxide | 14 | 0.68 | Lithium hydroxide | 18 | 3.5 | 5 |
| Example 14 | Iron(III) oxide hydroxide | 14 | 0.68 | Lithium hydroxide | 18 | 3.5 | 5 |
| Comparative Example 1 | Iron(III) oxide | 15 | 0.70 | Lithium hydroxide | 18 | - | - |
| Comparative Example 2 | Iron(III) oxide | 15 | 0.70 | Lithium hydroxide | 18 | - | - |
| Comparative Example 3 | Iron(III) oxide | 15 | 0.70 | Lithium hydroxide | 18 | - | - |

[Table 2]

| | Li/Fe mole ratio | x | y | SO₃ ppm | Half width I23.6° 2θ/° | I44.6°/I23.6° % | I43.5°/I23.6° % | I16.7°/I23.6° % | Lattice constant a Å | Lattice constant b Å | Lattice constant c Å | Lattice volume V Å³ | a/c | b/c |
|---|---|---|---|---|---|---|---|---|---|---|---|---|---|---|
| Example 1 | 5.2 | 0.96 | 3.94 | 1220 | 0.11 | 0 | 0 | 37 | 9.15033 | 9.22098 | 9.20683 | 776.8 | 0.99386 | 1.00154 |
| Example 2 | 5.6 | 0.89 | 3.84 | 881 | 0.11 | 0 | 1 | 35 | 9.15024 | 9.22014 | 9.20648 | 776.7 | 0.99389 | 1.00148 |
| Example 3 | 6.0 | 0.83 | 3.75 | 582 | 0.11 | 0 | 0 | 36 | 9.15150 | 9.22102 | 9.20703 | 776.9 | 0.99397 | 1.00152 |
| Example 4 | 7.0 | 0.71 | 3.57 | 209 | 0.12 | 0 | 0 | 36 | 9.15032 | 9.22089 | 9.20682 | 776.8 | 0.99386 | 1.00153 |
| Example 5 | 8.0 | 0.63 | 3.45 | 80 | 0.12 | 0 | 0 | 37 | 9.15002 | 9.21987 | 9.20628 | 776.7 | 0.99389 | 1.00148 |
| Example 6 | 5.6 | 0.89 | 3.84 | 989 | 0.10 | 0 | 1 | 36 | 9.15011 | 9.21991 | 9.20639 | 776.7 | 0.99389 | 1.00147 |
| Example 7 | 5.6 | 0.89 | 3.84 | 702 | 0.11 | 0 | 1 | 38 | 9.15025 | 9.22014 | 9.20688 | 776.8 | 0.99385 | 1.00144 |
| Example 8 | 5.6 | 0.89 | 3.84 | 4850 | 0.12 | 0 | 1 | 34 | 9.15029 | 9.22020 | 9.20647 | 776.7 | 0.99390 | 1.00149 |
| Example 9 | 5.6 | 0.89 | 3.84 | 317 | 0.12 | 0 | 0 | 35 | 9.15052 | 9.22021 | 9.20680 | 776.8 | 0.99389 | 1.00146 |
| Example 10 | 5.6 | 0.89 | 3.84 | 104 | 0.11 | 0 | 4 | 36 | 9.15043 | 9.22072 | 9.20652 | 776.8 | 0.99391 | 1.00154 |
| Example 11 | 5.6 | 0.89 | 3.84 | 431 | 0.11 | 0 | 0 | 35 | 9.15127 | 9.22071 | 9.20694 | 776.9 | 0.99395 | 1.00150 |
| Example 12 | 5.6 | 0.89 | 3.84 | 299 | 0.12 | 0 | 0 | 35 | 9.15044 | 9.22027 | 9.20681 | 776.8 | 0.99388 | 1.00146 |
| Example 13 | 5.6 | 0.89 | 3.84 | 262 | 0.12 | 0 | 0 | 35 | 9.15050 | 9.22019 | 9.20679 | 776.8 | 0.99389 | 1.00146 |
| Example 14 | 5.7 | 0.88 | 3.82 | 284 | 0.12 | 0 | 0 | 35 | 9.15051 | 9.22022 | 9.20681 | 776.8 | 0.99389 | 1.00146 |
| Comparative Example 1 | 5.0 | 0.00 | 2.50 | 1310 | 0.12 | 0 | 7 | 41 | 9.15236 | 9.22028 | 9.20405 | 776.7 | 0.99438 | 1.00176 |
| Comparative Example 2 | 5.2 | 0.96 | 3.94 | 791 | 0.12 | 0 | 2 | 46 | 9.15268 | 9.22474 | 9.20634 | 777.3 | 0.99417 | 1.00200 |
| Comparative Example 3 | 5.6 | 0.89 | 3.84 | 828 | 0.16 | 0 | 0 | 42 | 9.15243 | 9.22683 | 9.20624 | 777.4 | 0.99415 | 1.00224 |

[Table 3]

| | Specific surface area (m²/g) | Volume resistivity (Ω·cm) | Average particle size D50 (μm) | Particle size distribution index D10/D50 | Particle size distribution index D90/D50 | Tap density (g/ml) | Metal ion elution rate (%) | Li ion elution (mg/kg) | L value for powder color | Charge capacity (mAh/g) | Discharge capacity (mAh/g) | Irreversible capacity (mAh/g) | Short circuit rate (%) |
|---|---|---|---|---|---|---|---|---|---|---|---|---|---|
| Example 1 | 1.2 | $7.40\times10^{10}$ | 9.4 | 0.16 | 3.12 | 1.16 | 0.00 | 6.5 | 60 | 795 | 1 | 793 | 0 |
| Example 2 | 1.3 | $0.87\times10^{10}$ | 11.1 | 0.19 | 2.50 | 1.26 | 0.00 | 1.3 | 68 | 877 | 1 | 875 | 0 |
| Example 3 | 1.3 | $1.45\times10^{10}$ | 10.8 | 0.16 | 3.63 | 1.01 | 0.00 | 0.1 | 71 | 758 | 1 | 756 | 0 |
| Example 4 | 1.0 | $5.20\times10^{10}$ | 10.1 | 0.18 | 2.72 | 1.15 | 0.00 | 3.3 | 74 | 788 | 2 | 787 | 0 |
| Example 5 | 1.1 | $4.87\times10^{10}$ | 9.0 | 0.20 | 2.74 | 1.18 | 0.00 | 4.2 | 76 | 785 | 1 | 784 | 0 |
| Example 6 | 1.5 | $8.32\times10^{10}$ | 8.0 | 0.20 | 2.67 | 1.04 | 0.00 | 2.0 | 65 | 893 | 1 | 891 | 0 |
| Example 7 | 0.9 | $0.59\times10^{10}$ | 9.4 | 0.28 | 2.37 | 1.21 | 0.00 | 0.7 | 75 | 912 | 1 | 911 | 0 |
| Example 8 | 1.3 | $4.53\times10^{10}$ | 9.4 | 0.16 | 3.12 | 1.16 | 0.00 | 2.6 | 64 | 852 | 2 | 850 | 0 |
| Example 9 | 1.4 | $2.54\times10^{10}$ | 10.0 | 0.19 | 2.67 | 1.19 | 0.00 | 1.1 | 70 | 866 | 1 | 865 | 0 |
| Example 10 | 2.0 | $1.10\times10^{10}$ | 9.8 | 0.19 | 2.61 | 1.20 | 0.00 | 0.9 | 59 | 813 | 1 | 811 | 0 |
| Example 11 | 1.4 | $0.99\times10^{10}$ | 11.3 | 0.25 | 2.30 | 1.25 | 0.00 | 1.4 | 72 | 840 | 1 | 839 | 0 |
| Example 12 | 1.5 | $3.72\times10^{10}$ | 10.7 | 0.19 | 2.68 | 1.19 | 0.00 | 0.9 | 75 | 832 | 1 | 831 | 0 |
| Example 13 | 8.9 | $4.30\times10^{10}$ | 9.0 | 0.16 | 3.33 | 1.01 | 0.00 | 1.1 | 15 | 811 | 1 | 810 | 0 |
| Example 14 | 1.5 | $5.49\times10^{10}$ | 10.3 | 0.20 | 2.75 | 1.25 | 0.00 | 1.0 | 70 | 833 | 1 | 832 | 0 |
| Comparative Example 1 | 1.2 | $7.98\times10^{10}$ | 11.2 | 0.15 | 2.32 | 1.17 | 0.00 | 4.0 | 57 | 714 | 3 | 711 | 0 |
| Comparative Example 2 | 1.3 | $3.52\times10^{10}$ | 9.6 | 0.20 | 2.78 | 1.11 | 0.00 | 7.9 | 59 | 682 | 2 | 680 | 0 |
| Comparative Example 3 | 1.0 | $9.46\times10^{10}$ | 9.3 | 0.16 | 3.18 | 1.05 | 0.00 | 9.3 | 68 | 628 | 4 | 624 | 0 |

**Claims**

1. A pre-doping agent for a power storage device, the pre-doping agent comprising, as a main component, a lithium iron oxide represented by the following formula (1):

$$Li_5Fe_xO_y \qquad (1)$$

wherein x satisfies $0.6 \leq x < 1.0$, and y satisfies $3.4 \leq y < 4.0$,
wherein the pre-doping agent exhibits an intensity ratio (I16.7/I23.6) of less than 40% between diffraction peak intensity at a diffraction angle ($2\theta$) of $16.7 \pm 0.5°$ (I16.7) and diffraction peak intensity at a diffraction angle ($2\theta$) of $23.6 \pm 0.5°$ (I23.6) in X-ray diffraction measurement.

2. A pre-doping agent for a power storage device, the pre-doping agent comprising, as a main component, a lithium iron oxide represented by the following formula (1):

$$Li_5Fe_xO_y \qquad (1)$$

wherein x satisfies $0.6 \leq x < 1.0$, and y satisfies $3.4 \leq y < 4.0$,
wherein the pre-doping agent exhibits an irreversible capacity of 712 mAh/g or more and 1100 mAh/g or less at a voltage of 3.0 to 4.3 V with reference to a Li reference electrode in initial charging.

3. The pre-doping agent according to claim 1 or 2, wherein the pre-doping agent exhibits an intensity ratio (I43.5/I23.6) of less than 10% between diffraction peak intensity at a diffraction angle ($2\theta$) of $43.5 \pm 0.5°$ (I43.5) and diffraction peak intensity at a diffraction angle ($2\theta$) of $23.6 \pm 0.5°$ (I23.6) in X-ray diffraction measurement.

4. The pre-doping agent according to any one of claims 1 to 3, wherein the pre-doping agent has a crystal structure with a space group of Pbca, and a/c and b/c as ratios of crystal lattice constants, a, b, and c, are 0.99410 or less and 1.00170 or less, respectively.

5. The pre-doping agent according to any one of claims 1 to 4, having a tap density of 1.0 to 1.5 g/ml.

6. The pre-doping agent according to any one of claims 1 to 5, having an $SO_3$ content of 5,000 ppm or less.

7. A positive electrode for a power storage device, the positive electrode comprising the pre-doping agent according to any one of claims 1 to 6 and a positive electrode active material.

8. A power storage device comprising the positive electrode according to claim 7 as a component.

9. A method for producing the pre-doping agent for a power storage device according to any one of claims 1 to 6, the pre-doping agent comprising, as a main component, a lithium iron oxide obtained by mixing and calcining an iron raw material and a lithium raw material, the method comprising:
mixing the iron raw material and the lithium raw material together, performing a first calcining step of calcining the resulting mixture in an inert gas atmosphere having an oxygen concentration of 1 to 52000 ppm at 350 to 650°C for 2 to 100 hours, pulverizing a powdery product obtained as a first calcined product, performing a second calcining step of calcining the pulverized powder in an inert gas atmosphere having an oxygen concentration of 1 to 52000 ppm at 700 to 1050°C for 2 to 100 hours, and pulverizing a powdery product obtained as a second calcined product to give the lithium iron oxide.

[FIG. 1]

[FIG. 2]

[FIG. 3]

## INTERNATIONAL SEARCH REPORT

| International application No. |
| --- |
| **PCT/JP2024/014407** |

| A. | CLASSIFICATION OF SUBJECT MATTER |
| --- | --- |

*H01M 4/62*(2006.01)i; *H01G 11/06*(2013.01)i; *H01G 11/30*(2013.01)i; *H01G 11/50*(2013.01)i; *H01M 4/13*(2010.01)i
FI:   H01M4/62 Z; H01M4/13; H01G11/06; H01G11/50; H01G11/30

According to International Patent Classification (IPC) or to both national classification and IPC

| B. | FIELDS SEARCHED |
| --- | --- |

Minimum documentation searched (classification system followed by classification symbols)

H01M4/62; H01G11/06; H01G11/30; H01G11/50; H01M4/13

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2022/172881 A1 (TEIKA CORP.) 18 August 2022 (2022-08-18) | 1-9 |
| A | WO 2021/029357 A1 (TAYCA CORP.) 18 February 2021 (2021-02-18) | 1-9 |
| A | JP 2020-167187 A (TAYCA CORP.) 08 October 2020 (2020-10-08) | 1-9 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **03 June 2024** | **11 June 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/014407**

| Patent document cited in search report | | | Publication date (day/month/year) | Patent family member(s) | | | Publication date (day/month/year) |
|---|---|---|---|---|---|---|---|
| WO | 2022/172881 | A1 | 18 August 2022 | US | 2023/0395854 | A1 | |
| | | | | EP | 4261929 | A1 | |
| | | | | KR | 10-2023-0084327 | A | |
| | | | | CN | 116583966 | A | |
| WO | 2021/029357 | A1 | 18 February 2021 | (Family: none) | | | |
| JP | 2020-167187 | A | 08 October 2020 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5220510 B
- JP 6217990 B
- WO 2022172881 A1
- JP 6922672 B